# EUROPEAN PATENT APPLICATION

(11) **EP 1 467 503 A1**
(43) Date of publication of application: **13.10.2004**
(21) Application number: 02715753.6
(22) Date of filing: 16.01.2002
(51) Int. Cl.: H04B 7/26

(54) **BASE STATION AND MOBILE STATION AND COMMUNICATION SYSTEM AND BASE STATION COMMUNICATION METHOD AND BASE STATION COMMUNICATION PROGRAM AND MOBILE STATION COMMUNICATION METHOD AND MOBILE STATION COMMUNICATION PROGRAM**

(71) Applicant: MITSUBISHI DENKI KABUSHIKI KAISHA, Tokyo 100-8310 (JP)
(72) Inventor: NIWANO, K. Mitsubishi Denki Kabushiki Kaisha, Chiyoda-ku, Tokyo 100-8310 (JP)
(74) Representative: Sajda, Wolf E., Dipl.-Phys.
(86) International application number: PCT/JP2002/000234
(87) International publication number: WO 2003/061158

(57) **Abstract**

It aims at suppressing power consumption of a transmission system amplifier and increasing a communication time period by controlling operation characteristics of the transmission system amplifier, based on a maximum transmission power value required at a transmission position of the mobile station (100). The base station (900) monitors the transmission position and reception quality of the mobile station (100). The maximum transmission power required at the transmission position is calculated by statistics processing or prediction. Based on this, the mobile station (100) controls the operation characteristics of the amplifier in order to output the required maximum transmission power.

## Description

### Technical field

The present invention relates to communications between a base station being a fixed communication station and a mobile station being a mobile communications station, and to transmission power control of the mobile station.

### BACKGROUND ART

As a radio communications system which performs transmission power control of a mobile station, PDC (Personal Digital Celler), CDMAone (Code Division Multiple Access one), etc. are mentioned, for example.

In the background of performing transmission power control of a mobile station, there exists an object of avoiding a so-called "hidden terminal problem" indicating that communication of a mobile station distant from a base station is interfered at the end of the base station as the transmission power of a mobile station near the base station is larger than the transmission power of the mobile station distant from the base station, when a plurality of mobile stations communicate with the base station. Specially in the communication system where a plurality of mobile stations perform communication in the same frequency band, like CDMAone, the transmission power control of a mobile station is an important technology because it is directly connected to the capability to enlarge communication capacity (the number of mobile stations with which the base station can simultaneously communicate) of the communication system.

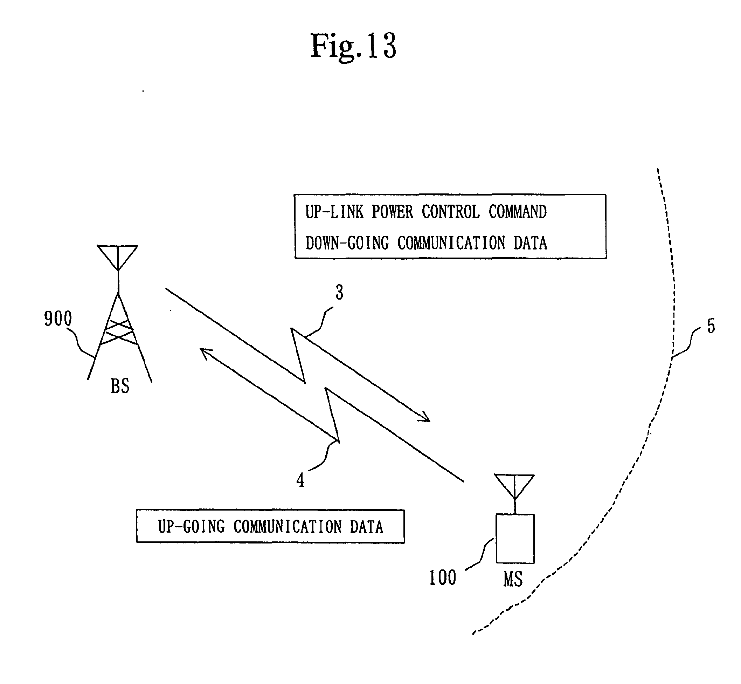

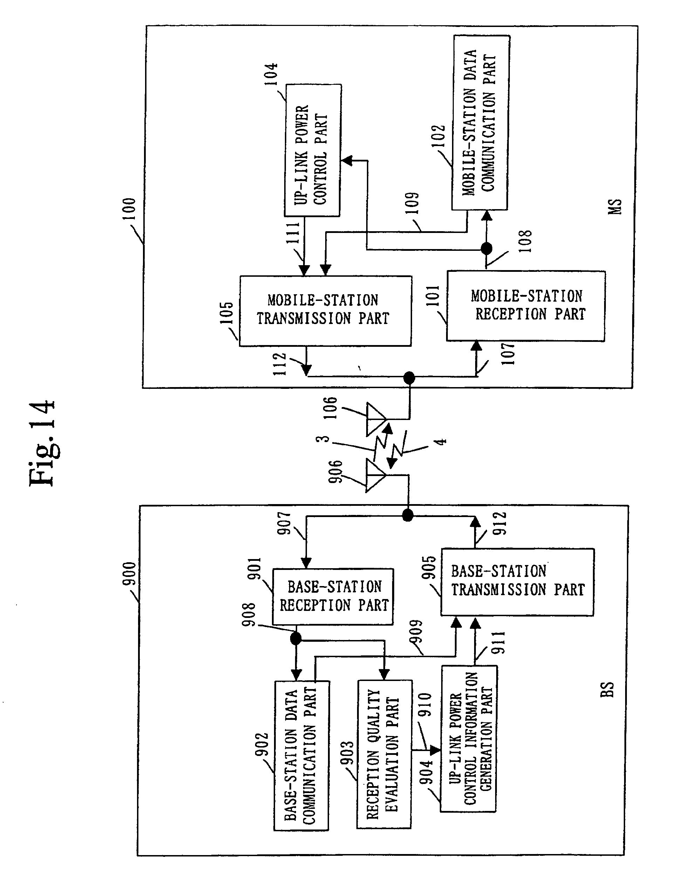

As an example of related arts, Fig. 13 shows a conceptual diagram of a communication system which performs transmission power control of a mobile station. Fig. 14 shows each internal function block of a base station and a mobile station.

In Fig. 13, 900 denotes a base station (BS: Base Station). 100 denotes a mobile station (MS: Mobile Station). 3 denotes a down-link which performs communication from the base station 900 to the mobile station 100, and 4 denotes an up-link which performs communication from the mobile station 100 to the base station 900. The link described herein indicates a frequency band allotted at the time of transmission for a specific purpose such as a transmission of data or control information. In CDMAone, as mentioned above, it is possible for a plurality of mobile stations to share the same frequency band to communicate. 5 shows a part of a base-station communication range where it is practicable to communication with the base station 900. The base-station communication range 5 is a so-called cell (Cell).

The base station 900 has a reception quality evaluation function and an up- link power control function. The mobile station 100 has a transmission power control function.

A radio frequency signal transmitted by the down-link 3 includes a command (up-link power control command) for controlling transmission power of the mobile station 100, in addition to down-going communication data. A radio frequency signal transmitted by the up-link 4 includes up-going communication data.

Next, the structure of the base station 900 and the mobile station 100 shown in Fig. 14 will be explained.

First, the base station 900 (BS) is now explained. 901 denotes a base-station reception part which receives a radio frequency signal of the up-link 4 and converts it into baseband frequency. 902 denotes a base-station data communication part which modulates/demodulates communication data of the up-link 4 and the down-link 3. 903 denotes a reception quality evaluation part which evaluates reception quality of the up-link 4. 904 denotes an up-link power control information generation part which generates a transmission power control signal of the mobile station 100. 905 denotes a base-station transmission part which converts down-link data and control data into a radio frequency signal of the down-link 3. 906 denotes an antenna of the base station 900 side, which performs transmission and reception.

907 denotes an up-link radio frequency signal, 908 denotes a baseband signal, 909 denotes down-link transmission data, 910 denotes reception quality evaluation information, 911 denotes up-link power control information having an up-link power control command, and 912 denotes a down-link radio frequency signal.

Next, the mobile station 100 (MS) will be explained. 101 denotes a mobile-station reception part which receives a radio frequency signal of the down-link 3 and converts it into baseband frequency. 102 denotes a mobile-station data communication part which modulates/demodulates data of the down-link 3 and the up-link 4. 104 denotes an up-link power control part which performs transmission power control of the mobile station 100. 105 denotes a mobile-station transmission part which converts up-link data into a radio frequency signal. 106 denotes an antenna of the mobile station 100 side, which performs transmission and reception.

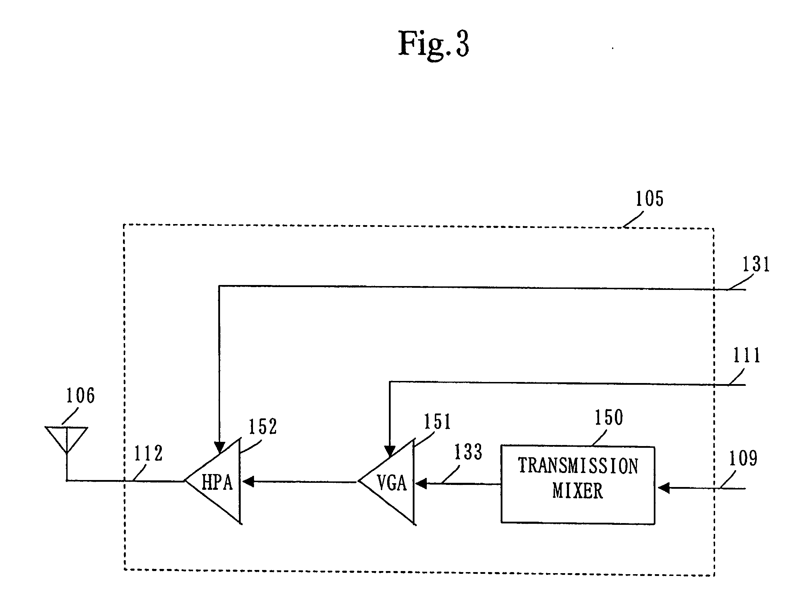

107 denotes a down-link radio frequency signal, 108 denotes a baseband signal, 109 denotes up-link transmission data, 111 denotes an up-link power control signal, and 112 denotes an up-link radio frequency signal. Like Fig. 13, 3 denotes a down-link and 4 denotes an up-link. With respect to the communication system structured as shown in Figs. 13 and 14., operations will be explained in order of the operation of the base station 900, and the operation of the mobile station 100.

### Operation of the base station 900

First, in the base station 900, the up-link radio frequency signal 907, being a radio frequency signal of the up-link 4 transmitted from the mobile station 100 and received at the antenna 906, is converted into baseband frequency to be the baseband signal 908 from the radio frequency, in the base-station reception part 901 and input into the base-station data communication part 902 and the reception quality evaluation part 903. The reception quality evaluation part 903 outputs the reception quality evaluation information 910, based on the inputted baseband signal 908, to the up-link power control information generation part 904. The up-link power control information generation part 904 generates an up-link power control command, based on the reception quality evaluation information 910, as the up-link power control information 911. This up-link power control command is a transmission power control command necessary for increasing/decreasing radio frequency signal power of the up-link 4. The generated up-link power control information 911 is input into the base-station transmission part 905.

The base-station transmission part 905 converts the down-link transmission data 909 from the base-station data communication part 902 and the up-link power control information 911 from the up-link power control information generation part 904 into the down-link radio frequency signal 912. The down-link radio frequency signal 912 is transmitted to the mobile station 100 from the antenna 906, as a radio frequency signal of the down-link 3.

### OPERATION OF THE MOBILE STATION 100

On the other hand, in the mobile station 100, a radio frequency signal of the down-link 3 transmitted from the base station 900 is received at the antenna 106. The received down-link radio frequency signal 107 is converted into baseband frequency from the radio frequency, in the mobile-station reception part 101, and output as the baseband signal 108. The outputted baseband signal 108 is input into the mobile-station data communication part 102 and the up-link power control part 104. The up-link power control part 104 separates the up-link power control information 911 being an up-link power control command generated in the base station 900, from the inputted baseband signal 108, and outputs it to the mobile-station transmission part 105 as the up-link power control signal 111. Moreover, the mobile-station data communication part 102 separates the down-link transmission data 909 from the inputted baseband signal 108 and outputs the up-link transmission data 109 to the mobile-station transmission part 105. The mobile-station transmission part 105 converts the inputted up-link transmission data 109 into the up-link radio frequency signal 112. The converted up-link radio frequency signal 112 is transmitted from the antenna 106 to the base station 900 through the up-link 4. At this time, the mobile-station transmission part 105 controls the transmission power of the up-link 4, based on the inputted up-link power control signal 111.

Reception quality required at the base station 900 is uniquely determined by a control operation of the transmission power of the mobile station 100. Accordingly, as shown above, the base station 900 transmits a signal for controlling the transmission power of the mobile station 100, based on the reception quality of the up-link 4, to the mobile station 100. Then, the mobile station 100 controls the transmission power of the up-link 4, based on the signal for controlling transmission power, transmitted from the base station 900. Therefore, the transmission power of the up-link 4 from a plurality of mobile stations 100 within the base-station communication range 5, being the transmission area of the base station 900, can be the equivalent value at the time of reaching the base station 900. Then, the communication capacity of the communication system can be the maximum.

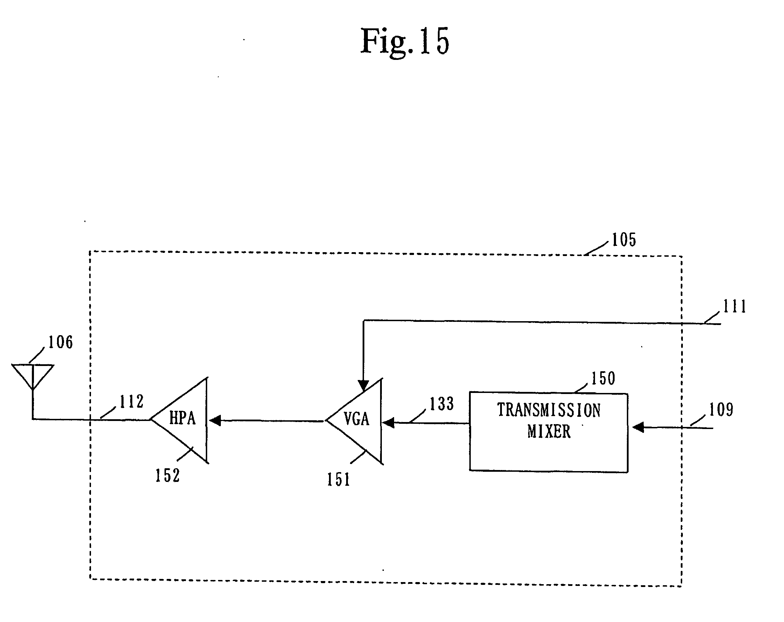

Next, operations of an amplifier in the structure of the general mobile-station transmission part 105 of the mobile station 100, which performs transmission power control will now be explained with reference to Fig. 15.

Fig. 15 shows an internal block diagram of the mobile-station transmission part 105. 109 denotes the up-link transmission data, 111 denotes the up-link power control signal, 150 denotes a transmission mixer, 133 denotes a radio frequency signal, 151 denotes a variable gain amplifier (Variable Gain Amplifier; described hereinafter as VGA), 152 denotes a high output power amplifier (High Power Amplifier; described hereinafter as HPA), and 112 denotes the up-link radio frequency signal.

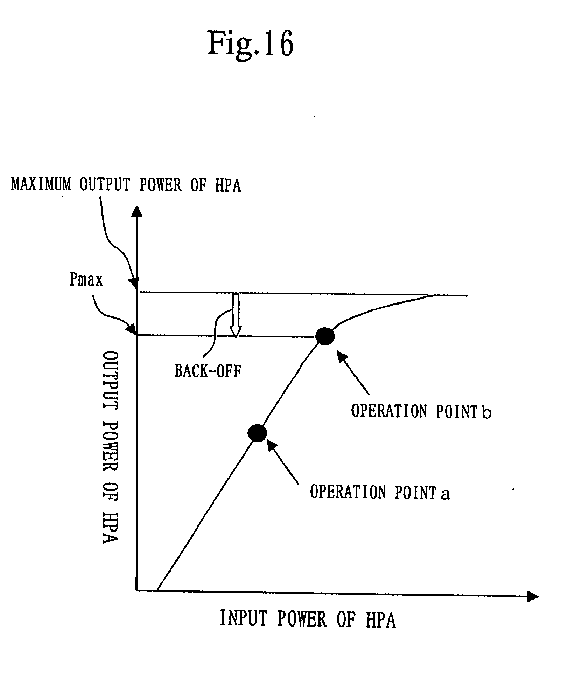

Fig. 16 shows an example of characteristics (input/output feature) of output power against input power of the HPA 152. The vertical axis indicates output power and the horizontal axis indicates input power. a and b represent operation points of the HPA 152 (amplifier).

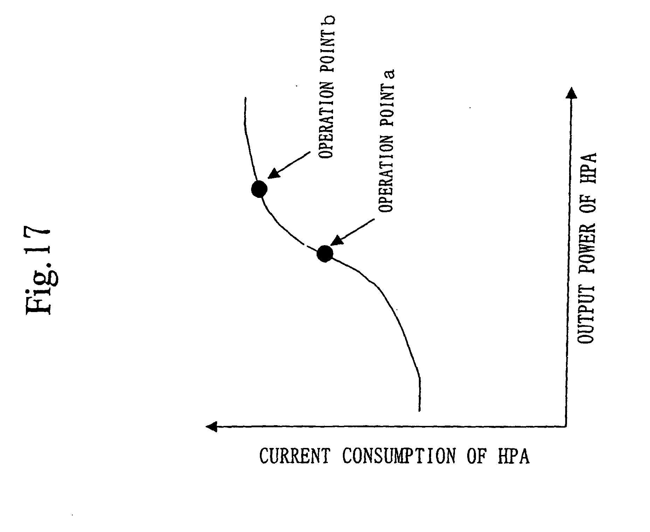

Furthermore, Fig. 17 shows characteristics of current consumption against the output power of the HPA 152 shown in Fig. 16. The vertical axis indicates current consumption and the horizontal axis indicates output power. Like Fig. 16, a and b represent a plurality of operation points of the HPA 152 (amplifier). At the time of the operation point b, the mobile station 100 transmits information at Pmax 935 being the maximum transmission power.

First, the up-link transmission data 109 of the up-link 4 is converted into the radio frequency signal 133 from the baseband signal, in the transmission mixer 150. Based on the up-link power control signal 111, the gain of the converted radio frequency signal 133 is controlled in the VGA 151 to make the transmission level equal to or less than the maximum transmission power Pmax 935, in order that the transmission power level transmitted from the antenna 106 can achieve reception quality required at the base station 900. Then, in the HPA 152, the converted radio frequency signal 133 is power-amplified up to the transmission power level required, and transmitted from the antenna 106 as the up-link radio frequency signal 112.

If it is needed to increase the output power of the HPA 152, the VGA 151 controls the input power level into the HPA 152 to become large. Therefore, it is possible for the HPA 152 to increase the transmission power of the up-link 4 by increasing the input power level to make the output power of the HPA 152 rise. For example, in the case that the HPA 152 operates at the operation point b because of the VGA 151 increasing the input power level into the HPA 152, the transmission power of the up-link 4 becomes the Pmax 935 being the maximum transmission power.

On the other hand, when it is needed to decrease the transmission power of the up-link 4, the VGA 151 is controlled to decease the input power level into the HPA 152. Therefore, the operation point of the HPA 152 shifts to the operation point a from b, and the HPA 152 operates at the operation point a.

The transmission power of the up-link radio frequency signal 112 output from the HPA 152 needs to satisfy conditions for permitted distortion. The permitted distortion herein indicates a size (or power ratio) of a nonlinear component transmitted, as an interfering power leakage to adjacent frequency bands, from the antenna 106, which is generated because power in proportion to the input power is not output at each part of the transmission system. Usually, in the communication system, the size of the permitted distortion at the end of the antenna 106 is specified based on system capacity etc. In the design of the transmission system of a mobile station, distortion of the HPA 152 is determined to satisfy the specification at the end of the antenna 106, and the range up to the operation point corresponding to it is specified as an operation range. This becomes the conditions for the permitted distortion for the HPA 152. For example, in Fig. 16, the range of the permitted distortion is from the point of 0 to the operation point b of the output power of the HPA 152, and distortion generated in the range beyond the operation point b is not permitted. The distortion of the output power of the HPA 512 usually becomes the largest at the time of the HPA 152 outputting the maximum output power. As mentioned above, distortion of the transmission power (distortion of the output power of the HPA 152) caused by the HPA 152 having an input power value beyond the operation point b becomes a cause of interfering power leakage to adjacent frequency bands. Therefore, it is better for the HPA 152 not to have an input power value beyond the operation point b in order to avoid the above-mentioned cause. Accordingly, the HPA 152 can output up to the maximum output power of the HPA 152 as shown in Fig. 16 as a characteristic of the apparatus, however, it is controlled to suppress the maximum of transmission power of the HPA 152 down to the Pmax 935 being the maximum of transmission power at the operation point b. The difference between the maximum output power of the HPA 152 and the output power of each operation point is herein called a back-off. In order to dissolve the above-mentioned distortion, the HPA 152 needs the back-off equal to or greater than the difference between the maximum output power of the HPA 152 and the Pmax 935 as shown in Fig. 16.

Thus, in the HPA 152, the maximum output power and bias current as an amplifier are set up and controlled in order that output power at each operation point may be within the range of the permitted distortion (or back-off).

However, in this setup, in the range of output power below the operation point a, the back-off becomes larger than the back-off amount, shown in Fig. 16, needed as the minimum as the operation of the HPA 152. Moreover, in this area, with reference to Fig. 17, even if the output power of the HPA 152 is small, current consumption of the HPA 152 does not proportionally become small. For this reason, the operation of the output power below the operation point a reduces the efficiency of the HPA 152. Therefore, there is a problem that the battery of the mobile station 100 is exhausted and the calling time period becomes short.

The present invention aims at progressing the efficiency of the transmission system amplifier of the mobile station 100 and elongating the communication time period of the mobile station 100.

### Disclosure of the Invention

According to a base station of the present invention, it is a feature that the base station includes:
a base-station reception part for receiving a radio signal from a mobile station,
a mobile-station-position monitor part for detecting location information on the mobile station from the radio signal received by the base-station reception part,
a correlation part for correlating a transmission power value for transmitting information with the location information on the mobile station, and
an up-link power control information generation part for selecting the transmission power value correlated by the correlation part to be corresponding to the location information on the mobile station detected by mobile-station-position monitor part, and for generating up-link power control information to the mobile station, based on a selected transmission power value.

It is a feature that the mobile-station-position monitor part detects a plurality of the location information on the mobile station from the radio signal received by the base-station reception part, and predicts a movement destination of the mobile station based on a detected plurality of the location information, and
the up-link power control information generation part calculates a transmission power value required for communication at a position of the movement destination of the mobile station predicted by the mobile-station-position monitor part, to be corresponding to the transmission power value required for communication at each position in the detected plurality of the location information on the mobile station, and generates up-link power control information to the mobile station, based on a calculated transmission power value.

It is a feature that the mobile-station-position monitor part predicts a movement destination of the mobile station, based on detected location information on the mobile station, and the up-link power control information generation part selects the transmission power value correlated by the correlation part to be corresponding to information on the movement destination of the mobile station predicted by the mobile-station-position monitor part, and generates the up-link power control information to the mobile station, based on a selected transmission power value.

It is a feature that the base station further includes a route information detection part for detecting route information on the mobile station, from the radio signal received by the base-station reception part,
the correlation part correlates the location information on the mobile station with the route information, and
the up-link power control information generation part selects the transmission power value correlated by the correlation part based on the route information detected by the route information detection part and the location information on the mobile station detected by mobile-station-position monitor part, and generates the up-link power control information to the mobile station, based on a selected transmission power value.

It is a feature that a plurality of the base stations exists, and
the mobile-station-position monitor part predicts a movement state of the mobile station based on a detected location information on the mobile station, selects the base station to communicate with the mobile station from the plurality of the base stations, based on a predicted movement state, and switches communication with the mobile station, to a selected base station.

According to a mobile station of the present invention, it is a feature that the mobile station includes:
a mobile-station reception part for receiving a radio signal including information on a transmission power value required for communication at a position of the mobile station, from a base station,
an amplifier for controlling up-link power by a control signal,
a transmission power value setting control part for separating the information on the transmission power value required for communication at the position of the mobile station, from the radio signal received by the mobile-station reception part, and for generating an amplifier-characteristic control signal for obtaining output characteristics of the amplifier to be corresponding to the transmission power value, from a separated information on the transmission power value, and
a mobile-station transmission part for controlling the output characteristics of the amplifier, based on the amplifier-characteristic control signal generated by the transmission power value setting control part.

It is a feature that the mobile station further includes an up-link power control part for generating a transmission power control signal for controlling the transmission power value to be transmitted to the base station, based on the information on the transmission power value separated by the transmission power value setting control part, and
the mobile-station transmission part controls the transmission power value of the amplifier, based on the transmission power control signal generated by the up-link power control part.

It is a feature that the transmission power value setting control part separates prediction information on a transmission power value required for communication at a movement destination of the mobile station, from the radio signal received by the mobile-station reception part, and generates the amplifier-characteristic control signal for obtaining the output characteristics of the amplifier to be corresponding to a predicted transmission power value based on separated prediction information on the transmission power value.

It is a feature that the mobile station further includes a prediction evaluation part for detecting the prediction information on the movement destination, from the radio signal received by the mobile-station reception part, comparing a detected movement destination with an actual position, and judging one of to adopt the prediction information on the movement destination and not to adopt the prediction information on the movement destination, and
the transmission power value setting control part, when it is judged to adopt the predicted information on the movement destination by the prediction evaluation part, generates the amplifier-characteristic control signal for obtaining the output characteristics of the amplifier to be corresponding to the predicted transmission power value.

It is a feature that the mobile station further includes a route setting part, by receiving designation of a starting point and a reaching point, for setting route information based on the starting point and the reaching point, and a mobile-station data communication part for multiplexing the route information set by the route setting part, to information to be transmitted to the base station.

According to a communication system of the present invention, it is a feature that the communication system comprises a base station which includes:
a base-station reception part for receiving a radio signal from a mobile station,
a mobile-station-position monitor part for detecting location information on the mobile station from the radio signal received by the base-station reception part,
a correlation part for correlating a transmission power value for transmitting information with the location information on the mobile station, and
an up-link power control information generation part for selecting the transmission power value correlated by the correlation part to be corresponding to the location information on the mobile station detected by mobile-station-position monitor part, and for generating up-link power control information to the mobile station, based on a selected transmission power value, and
the communication system comprises a mobile station which includes:
   a mobile-station reception part for receiving a radio signal including information on a transmission power value required for communication at a position of the mobile station, from a base station,
   an amplifier for controlling up-link power by a control signal,
   a transmission power value setting control part for separating the information on the transmission power value required for communication at the position of the mobile station, from the radio signal received by the mobile-station reception part, and for generating an amplifier-characteristic control signal for obtaining output characteristics of the amplifier to be corresponding to the transmission power value, from a separated information on the transmission power value, and
   a mobile-station transmission part for controlling the output characteristics of the amplifier, based on the amplifier-characteristic control signal generated by the transmission power value setting control part.

According to a base station communication method of the present invention, it is a feature that the base station communication method includes:
receiving a radio signal from a mobile station,
detecting location information on the mobile station from a received radio signal,
correlating detected location information on the mobile station with a transmission power value for transmitting information, and
generating up-link power control information to the mobile station, based on a correlated transmission power value.

According to the present invention, it is a feature that a base station communication program makes a computer execute processes of :
receiving a radio signal from a mobile station,
detecting location information on the mobile station from a received radio signal,
correlating detected location information on the mobile station with a transmission power value for transmitting information, and
generating up-link power control information to the mobile station, based on a correlated transmission power value.

According to a mobile station communication method of the present invention, it is a feature that the mobile station communication method includes:
receiving a radio signal including information on a transmission power value required for communication at a position of a mobile station, from a base station,
separating the information on the transmission power value required for communication at the position of the mobile station, from a received radio signal,
generating an amplifier-characteristic control signal for obtaining output characteristics of an amplifier to be corresponding to the transmission power value, from a separated information on the transmission power value, and
controlling the output characteristics of the amplifier, based on a generated amplifier-characteristic control signal.

According to the present invention, it is a feature that a mobile station communication program makes a computer execute processes of:
receiving a radio signal including information on a transmission power value required for communication at a position of a mobile station, from a base station,
separating the information on the transmission power value required for communication at the position of the mobile station, from a received radio signal, and generating an amplifier-characteristic control signal for obtaining output characteristics of an amplifier to be corresponding to the transmission power value, from a separated information on the transmission power value, and
controlling the output characteristics of the amplifier, based on a generated amplifier-characteristic control signal.

### Brief Description of the Drawings

- Fig. 1: shows a conceptual diagram for explaining a communication system according to Embodiment 1 of the present invention;
- Fig. 2: shows an internal block diagram for explaining operations of a base station and a mobile station according to Embodiment 1 of the present invention;
- Fig. 3: shows an internal block diagram for explaining operations of a mobile-station transmission part according to Embodiment 1 of the present invention;
- Fig. 4: shows an input/output feature of an amplifier (HPA) according to Embodiment 1 of the present invention;
- Fig. 5: shows current consumption against output power of the amplifier (HPA) according to Embodiment 1 of the present invention;
- Fig. 6: shows a conceptual diagram for explaining a communication system according to Embodiment 2 of the present invention;
- Fig. 7: shows an internal block diagram for explaining operations of a base station and a mobile station according to Embodiment 2 of the present invention;
- Fig. 8: shows a conceptual diagram for explaining a communication system according to Embodiment 3 of the present invention;
- Fig. 9: shows an internal block diagram for explaining operations of a base station and a mobile station according to Embodiment 3 of the present invention;
- Fig. 10: shows a conceptual diagram for explaining a communication system according to Embodiment 4 of the present invention;
- Fig. 11: xshows an internal block diagram for explaining operations of a base station and a mobile station according to Embodiment 4 of the present invention;
- Fig. 12: shows a conceptual diagram for explaining a communication system according to Embodiment 5 of the present invention;
- Fig. 13: shows a conceptual diagram for explaining a related communication system;
- Fig. 14: shows an internal block diagram for explaining operations of a related base station and a related mobile station;
- Fig. 15: shows an internal block diagram for explaining operations of a mobile-station transmission part in a related mobile station;
- Fig. 16: shows an input/output feature of an amplifier (HPA) in a related mobile station; and.
- Fig. 17: shows current consumption against output power of an amplifier (HPA) in a related mobile station.

### Best Mode for Carrying Out the Invention

### Embodiment 1

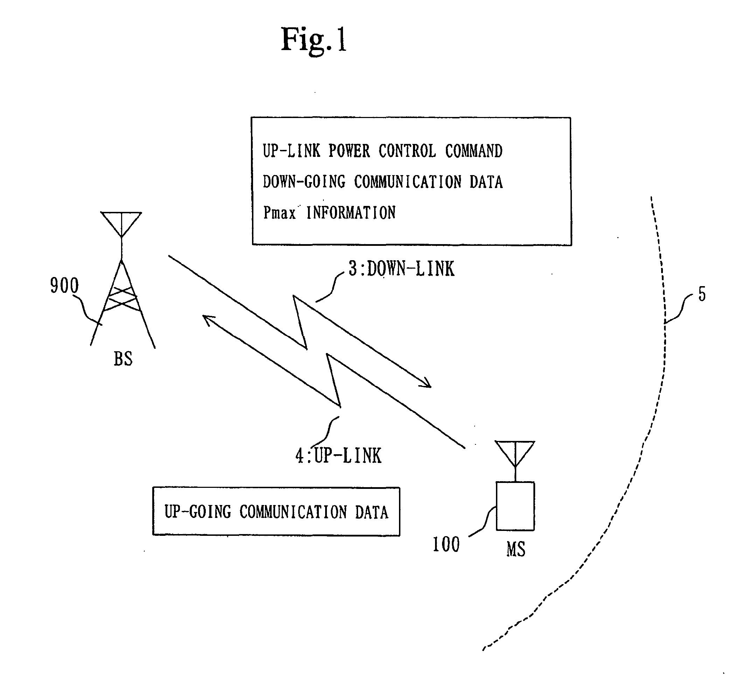

Embodiment 1 of the present invention will be explained with reference to Figs. 1 through 5. In addition, explanations for the same block as described in the clause of the above "Related Art" or a block corresponding to the one described in it will be omitted.

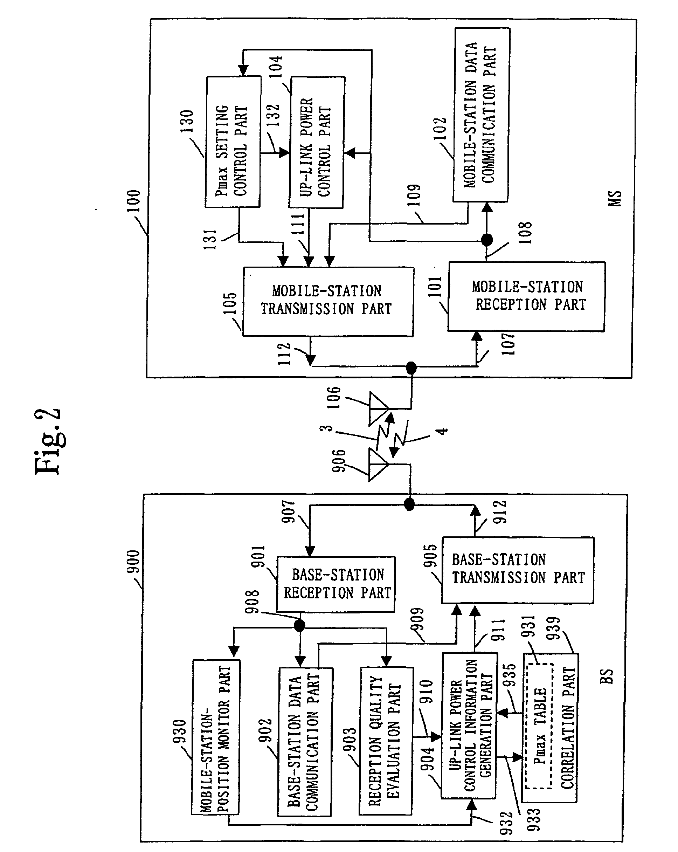

Fig. 1 shows a conceptual diagram of a communication system which performs transmission power control of a mobile station 100, as an Embodiment 1 of the present invention. Fig. 2 shows each internal functional block of a base station 900 and the mobile station 100.

First, in Fig. 1, information transmitted by a down-link 3 includes a command (up-link power control command) for controlling transmission power of the mobile station 100 and information data concerning Pmax 935 being the maximum transmission power for the current position of the mobile station 100, in addition to down-going communication data. Moreover, information transmitted by an up-link 4 includes up-going communication data.

The base station 900 includes functions of monitoring a position of the mobile station 100 and determining the maximum transmission power (Pmax 935) of the mobile station 100, in addition to the function of monitoring and evaluating reception quality and the function of controlling transmission power of the down-link 3 as mentioned above.

The mobile station 100 includes a function of controlling setting-up of the maximum transmission power (Pmax 935) of the mobile station 100 and a function of controlling an amplifier, in addition to the function of controlling transmission power of the up-link 4 as mentioned above.

Next, it will be explained with reference to Fig. 2. First, the internal structure of the base station 900 is explained. 911 denotes up-link power control information. 930 denotes a mobile-station-position monitor part. 931 denotes a Pmax table. The Pmax table is a transmission power table which stores a plurality of maximum transmission power values (Pmax 935) required for communication at a position of the mobile station 100, corresponding to a plurality of positions of the mobile station. The Pmax table 931 includes a function of updating itself at any time by using a result of evaluation performed by a reception quality evaluation part 903.

939 denotes a correlation part which has a function of correlating a transmission power value for transmitting information and location information on a mobile station. Not only correlating the maximum transmission power value and information about a position of the mobile station by using the Pmax table 931, it is also possible for the correlation part 939 to relate a transmission power value with information about a position of the mobile station without using the Pmax table 931, as mentioned later in the present Embodiment. For example, the following method can also be considered that the correlation part 939 calculates distance to the base station 900 based on the location information, and stores a formula for computing a transmission power value, and whenever receiving location information, the correlation part 939 determines a transmission power value by using the formula.

932 denotes monitor information including mobile-station-position information. 933 denotes search information for searching the Pmax table. 935 denotes Pmax showing the most optimum maximum transmission power for a specific position of the mobile station 100.

Next, the internal structure of the mobile station 100 will be explained. 130 denotes a Pmax setting control part. The Pmax setting control part indicates a transmission power value setting control part. 131 denotes an amplifier-characteristic control signal. 132 denotes a Pmax setting signal.

Regarding the communication system structured as shown in Figs. 1 and 2, respects differing from the operation of the above "Related Art" will be explained in order of the operations of the base station 900 and the mobile station 100.

### Operation of the base station 900

First, the base station 900 receives a radio frequency signal of the up-link 4 through an antenna 906. The received radio frequency signal is converted into baseband frequency from the radio frequency, in a base-station reception part 901. A baseband signal 908 having been converted into the baseband frequency is input into a base-station data communication part 902, the reception quality evaluation part 903, and the mobile-station-position monitor part 930.

The mobile-station-position monitor part 930 detects a current position of the mobile station 100 from the received baseband signal 908 and transmits the detected mobile-station-position information to an up-link power control information generation part 904, as monitor information 932.

The reception quality evaluation part 903 evaluates reception quality of the radio frequency signal from the mobile station 100, and outputs it as reception quality evaluation information 910.

The up-link power control information generation part 904 determines Pmax 935 which is the maximum transmission power required at the current position, based on the monitor information 932. That is, the up-link power control information generation part 904 searches the Pmax table 931 stored in the correlation part 939, based on the location information on the mobile station 100 from the monitor information 932 as search information 933, and chooses the maximum transmission power (Pmax 935) corresponding to the position of the mobile station 100 shown in the search information 933. As mentioned above, in the Pmax table 931, required Pmax 935 is continuously updated, based on a position of the mobile station 100 and the reception quality evaluation information 910 at the position.

A base-station transmission part 905 converts down-link transmission data 909 output from the base-station data communication part 902 and the up-link power control information 911 including Pmax 935 being the maximum transmission power information, into a radio frequency signal and outputs it to the down-link 3 from the antenna 906.

### OPERATION OF THE MOBILE STATION 100

Next, operations of the mobile station 100 will be explained.

In the mobile station 100, a mobile-station reception part 101 converts a down-link radio frequency signal 107 received from the down-link 3, into baseband frequency from the radio frequency . A converted baseband signal 108 is input into a mobile-station data communication part 102, an up-link power control part 104 and the Pmax setting control part 130 .

The Pmax setting control part 130 separates maximum transmission power (Pmax 935) information corresponding to the position of the mobile station 100, from the inputted baseband signal 108, generates an amplifier-characteristic control signal 131 corresponding to Pmax 935 required to control the amplifier characteristic, such as control of bias current of the HPA 152, and sends the generated amplifier-characteristic control signal 131 to a mobile-station transmission part 105. The Pmax setting control part 130 generates a Pmax setting signal 132 concerning the maximum transmission power information, from the amplifier-characteristic control signal 131, and sends it to the up-link power control part 104.

The up-link power control part 104 separates the up-link power control information 911 generated in the base station 900, based on the inputted baseband signal 108. Moreover, the up-link power control part 104 sets up the maximum transmission power control signal based on the Pmax setting signal 132 so that the maximum transmission power of the up-link 4 may not exceed the Pmax 935, and outputs it as an up-link power control signal 111, with the information separated from the baseband signal 108 as mentioned above, to the mobile-station transmission part 105.

The mobile-station transmission part 105 converts up-link transmission data 109 inputted from the mobile-station data communication part 102, into a radio frequency signal 112.

The radio frequency signal 112 is transmitted to the base station 900 from the antenna 106 through the up-link 4. At this time, in the mobile-station transmission part 105, transmission power is controlled based on the inputted up-link power control signal 111, and characteristics of an amplifier are also controlled by the amplifier-characteristic control signal 131 from the Pmax setting control part 130.

Next, the internal structure of the mobile-station transmission part 105 which performs transmission power control and amplifier-characteristic control, and operations of the amplifier in the mobile-station transmission part 105 will be explained with reference to Figs. 3 through 5.

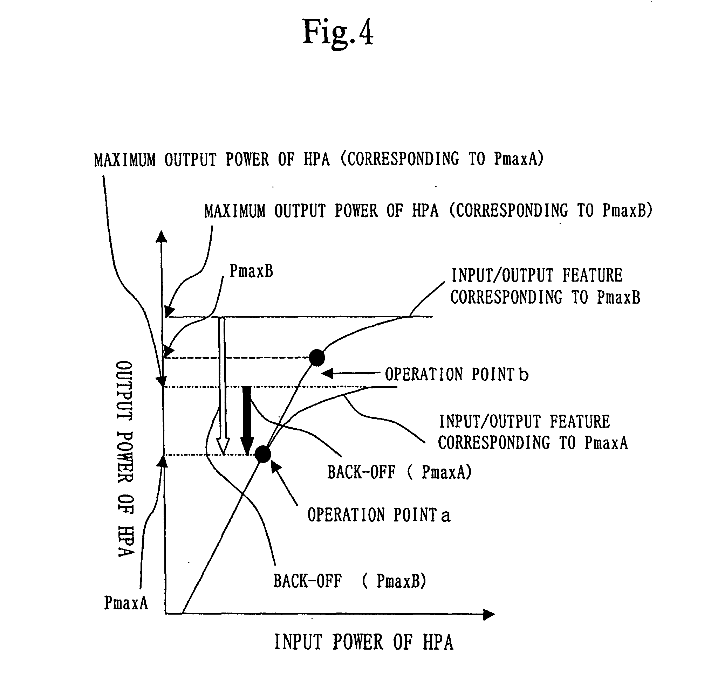

Fig. 4 shows one example of output power characteristics against the input power (input/output feature) of the HPA 152. The input/output feature curve corresponding to the PmaxB illustrated in Fig. 4 shows an input/output feature of the HPA 152 which becomes the maximum transmission power (PmaxB) at the operation point b. The input/output feature curve corresponding to PmaxA shows an input/output feature of the HPA 152 which becomes the maximum transmission power (PmaxA) at the operation point a. Therefore, the relation of the maximum transmission powers is PmaxB > PmaxA.

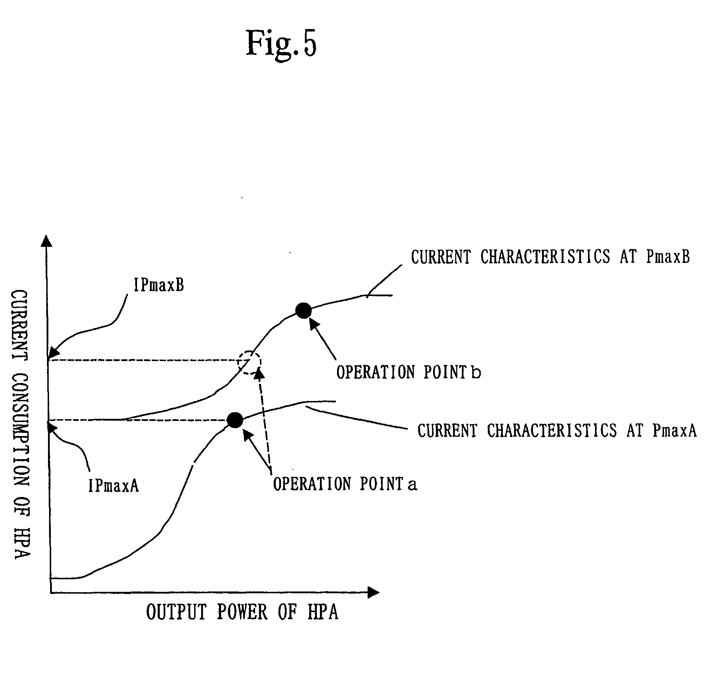

Fig. 5 shows characteristics of current consumption against the output power of the HPA 152 shown in Fig. 4. When the maximum transmission power decreases from the PmaxB to the PmaxA, the power consumption of the HPA 152 also decreases relatively.

The internal operation of the mobile-station transmission part 105 shown in Fig. 3 will now be explained. First, the up-link transmission data 109 of the up-link 4 is converted into a radio frequency signal 133 from the baseband signal, in a transmission mixer 150. The transmission level of the converted radio frequency signal 133 is controlled to be equal to or less than the maximum transmission power Pmax 935, in a VGA 151, based on the link power control signal 111.

The HPA 152 controls a device input/output feature as an amplifier of the HPA 152, based on the amplifier-characteristic control signal 131 from the Pmax setting control part. That is, for example, there is a control method that the HPA 152 judges output voltage characteristics (input/output feature of the HPA 152 being an amplifier) against its input voltage required by the amplifier-characteristic control signal 131, and controls bias current or bias voltage of the HPA 152 being itself, to satisfy the required input/output feature. Moreover, for example, the control method that HPA 152 controls supply voltage in order to satisfy the input/output feature required by the amplifier-characteristic control signal 131 is also considered. In addition, the above-mentioned bias current or bias voltage means the current or voltage applied to the amplifier when there is no incoming signal.

With performing such control of the input/output feature, the HPA 152 amplifies the power of the signal from the VGA 151 to be a required transmission power level, and transmits it as the up-link radio frequency signal 112 from the antenna 106.

When the HPA 152 changes the maximum transmission power value, from the PmaxB having a large maximum transmission power to the PmaxA having a small maximum transmission power, the input/output feature of the HPA 152 changes as shown in Figs. 4 and 5. That is, as shown in Fig. 4, the back-off at the operation point a becomes a back-off (PmaxA) when having the input/output feature corresponding to the PmaxA, and can be small compared with the back-off (PmaxB) at the time of having the input/output feature corresponding to the PmaxB. Thus, the bias current of the HPA 152 can be reduced by decreasing the back-off at the operation point a. That is, as shown in Fig. 5, when the HPA 152 changes the maximum transmission power value, from the PmaxB being a large maximum transmission power to the PmaxA being a small maximum transmission power, the current characteristics at the time of setting the maximum transmission power at the PmaxB shifts to the current characteristics at the time of setting the maximum transmission power at the PmaxA. Therefore, the current consumption of the HPA 152 decreases to IPmaxA which is the current consumption at the operation point a at the time of setting the maximum transmission power to be PmaxA, from IPmaxB which is the current consumption at the operation point a at the time of setting the maximum transmission power to be PmaxB.

Thus, current consumption at each operation point is reduced by dynamically controlling the maximum transmission power (Pmax 935) in order to make the amount of back-off at the operation point a the minimum by way of changing the input/output feature of the HPA 152.

As described above, the communication system which is composed of the base station 900 being a fixed station and the mobile station 100 and performs transmission power control of the mobile station 100, is characterized by having a function of monitoring a transmission position of the mobile station 100 and a transmission power value at the transmission position and determining the maximum transmission power value required at the transmission position, and a function of controlling the operation state of the transmission system amplifier of the mobile station 100 based on the maximum transmission power value.

Thus, in the above-mentioned communication system, by dint of the mobile station 100 receiving information on the maximum transmission power required at the position of the mobile station 100 and controlling the input/output feature of the amplifier (HPA 152), it is possible to progress the efficiency of the amplifier at the time of low transmission power and make the battery of the mobile station 100 last long, which is effective in elongating the communication time period.

In the explanation of the present Embodiment, the Pmax table 931 being a transmission power table is held in the base station 900. As an updating method of the Pmax table 931, not only the method of updating and setting by using a value to certainly satisfy the reception quality, it is also acceptable to update and set the Pmax table 931 by the method of, for example, determining a required maximum value in the range giving no practical problem to the communication system, based on a statistics processing etc. Thus, it is not limited to the method described in the present Embodiment.

Moreover, in the explanation of the present Embodiment, information on the position of the mobile station 100 and Pmax 935 which is maximum transmission power information data corresponding to the position information are reported to the mobile station 100. However, in the case of frequently controlling the Pmax 935, it is also acceptable to send the Pmax 935 only.

Moreover, in the explanation of the present Embodiment, information on the maximum transmission power Pmax 935 required at the transmission position of the mobile station 100 is reported to the mobile station 100 by way of multiplexing to the down-link 3 concerning the communication from the base station 900 to the specific mobile station 100. However, there is no necessity for carrying out the multiplex (namely, reporting to the specific mobile station 100) in the same link. It is also acceptable to broadcast as a common down-link 3 to all the mobile stations 100, and for each mobile station 100 to receive only required information.

Moreover, in the explanation of the present Embodiment, it has a function of reporting information on the maximum transmission power Pmax 935 required at the transmission position of the mobile station 100 to the mobile station 100, by way of multiplexing to the down-link 3 from the base station 900, and a function of controlling the amplifier (HPA 152) by the mobile station 100, based on the information. However, it is also acceptable that the base station 900 side has an amplifier control function of multiplexing data for controlling the mobile-station amplifier to the down-link 3 as a control command and that the mobile station 100 controls the amplifier based on only the data for control. Then, each function can be included in whichever of the base station 900 and the mobile station 100.

Moreover, in the explanation of the present Embodiment, the base station 900 has a function of monitoring a position of the mobile station 100, and independently performs the position monitoring of the mobile station 100. However, it is also acceptable that the mobile station 100 has a function of monitoring its own position. For example, the mobile station 100 may include a GPS (Global Positioning System) function etc., or the mobile station 100 may have a function of connecting to an apparatus having the GPS function, obtaining information on its own position of the mobile station 100 by connecting to the apparatus, and transmitting the location information from the mobile station 100 to the base station 900 through the up-link 4.

Moreover, in the explanation of the present Embodiment, the case that two sorts of operation states corresponding to the operation points a and b are set up as an operation of the transmission system amplifier (HPA 152) has been explained. It is also acceptable to perform the operation control of the amplifier (HPA512) with respect to many operation states or continuously perform the operation control of the amplifier.

### EMBODIMENT 2

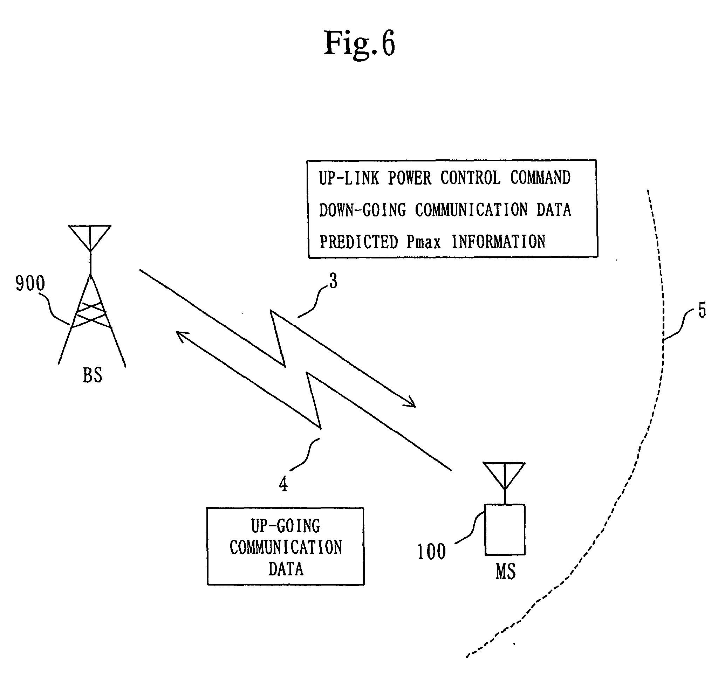

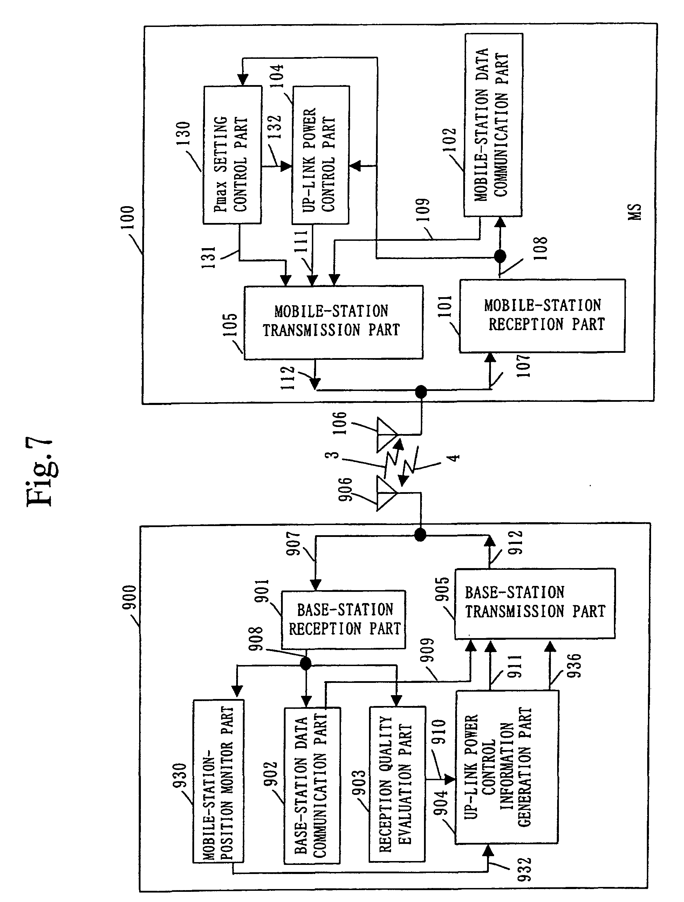

Next, Embodiment 2 of the present invention will be explained with reference to Fig. 6 and Fig. 7. Fig. 6 shows a conceptual diagram for explaining the communication system according to Embodiment 2 of the present invention. Fig. 7 shows an internal block diagram for explaining operations of the base station 900 and the mobile station 100 according to Embodiment 2 of the present invention.

A part of explanations for the same block as described in the clause of the above "Related Art" or a block corresponding to the one described in it will be omitted, and explanations focusing on different respects will be performed.

First, the concept of the communication system which performs transmission power control of the mobile station 100 is explained with reference to Fig. 6.

In Fig. 6, in information transmitted by the down-link 3, information data concerning a predicted Pmax 936 being predicted maximum transmission power information, with a command (up-link power control command) for controlling transmission power of the mobile station 100 is included in addition to down-going communication data. In information transmitted by the up-link 4, up-going communication data is included.

The base station 900 includes a function of monitoring a position of the mobile station 100, predicting a movement destination of the mobile station 100 based on the monitored position of the mobile station 100, and a function of predicting maximum transmission power (predicted Pmax 936) corresponding to the predicted movement destination of the mobile station 100, in addition to the function of monitoring and evaluating reception quality and the function of generating a signal for controlling transmission power of the up-link 4 as mentioned above.

The mobile station 100 includes a function of controlling the predicted maximum transmission power (predicted Pmax 936) of the mobile station 100 and a function of controlling the amplifier, in addition to the function of controlling the transmission power of the up-link 4 like the mobile station 100 described in Embodiment 1

Next, each internal structure and its function and operation of the base station 900 and the mobile station 100 will be explained with reference to Fig. 7.

In the present Embodiment, the mobile-station-position monitor part 930 has a function of predicting a movement destination of the mobile station 100. The monitor information 932 includes information relating to a position of the mobile station 100 and information relating to a predicted movement destination of the mobile station 100. The up-link power control information generation part 904 has a function of predicting a maximum transmission power (predicted Pmax 936) corresponding to the predicted movement destination of the mobile station 100 which the mobile-station-position monitor part 930 predicted. 911 denotes the up-link power control information. 936 denotes the predicted Pmax indicating the maximum transmission power information predicted by the up-link power control information generation part 904.

Regarding the communication system structured as shown in Figs. 6 and 7, respects differing from the operation of the above "Related Art" will be explained in order of the operations of the base station 900 and the mobile station 100.

### Operation of the base station 900

First, the base station 900 receives a radio frequency signal of the up-link 4 from the antenna 906. The received radio frequency signal is converted into baseband frequency from the radio frequency, in the base-station reception part 901. The baseband signal 908 having been converted into the baseband frequency is input into the base-station data communication part 902, the reception quality evaluation part 903, and the mobile-station-position monitor part 930.

The mobile-station-position monitor part 930 detects a current position of the mobile station 100 from the received baseband signal 908, calculates the difference between the current position of the detected mobile station 100 and the past position of the mobile station 100, and predicts a movement destination based on the movement speed and the movement direction from the calculation result. However, it is not necessarily needed for the mobile-station-position monitor part 930 to predict a movement destination based on the current position and the past position of the mobile station 100, and it is enough to predict the movement destination of the mobile station based on equal to or greater than two pieces of location information of the detected mobile station 100.

The mobile-station-position monitor part 930 transmits the information on the predicted movement destination of the mobile station 100 to the up-link power control information generation part 904, as monitor information 932

The up-link power control information generation part 904 computes a predicted Pmax 936 required at the position of the movement destination of the mobile station 100, based on the reception quality evaluation information 910 on the reception quality of the up-link 4 and the predicted monitor information 932 on the mobile station 100. Specifically, the up-link power control information generation part 904 computes the predicted Pmax 936 required at the position of the movement destination of the mobile station 100 by a linear interpolation based on positions of the mobile station 100 up to the present moment, the position of the movement destination of the mobile station 100, and Pmax 935 values up to the present moment. It is also acceptable to compute the predicted Pmax 936 by the linear interpolation based on location information of two or greater than two pieces, and Pmax 935 for each location information. The computed predicted Pmax 936 is input into the base-station transmission part 905.

In addition, it is also acceptable to have the method of the up-link power control information generation part 904 selecting the predicted Pmax 936 corresponding to the movement destination from the Pmax table mentioned above, based on the information on the movement destination of the mobile station 100 included in the monitor information 932.

The base-station transmission part 905 converts the down-link transmission data 909, the up-link power control information 911, and the predicted Pmax 936, into a down-link radio frequency signal 912 and transmits it from the antenna 906 using the down-link 3.

### OPERATION OF THE MOBILE STATION 100

The mobile-station reception part 101 of the mobile station 100 converts the down-link radio frequency signal 107 received from the antenna 106 into the baseband signal 108, and transmits it into the mobile-station data communication part 102, the up-link power control part 104, and the Pmax setting control part 130.

The Pmax setting control part 130 separates the predicted Pmax 936 included in the down-link 3. The Pmax setting control part 130 generates the amplifier-characteristic control signal 131 for controlling the input/output feature of the amplifier (HPA 152) corresponding to the predicted Pmax 936 at the predicted movement destination, based on the separated predicted Pmax 936, and transmits it to the mobile-station transmission part 105.

The up-link power control part 104 separates the up-link power control information 911 generated in the base station 900, from the inputted baseband signal 108. Moreover, the up-link power control part 104 sets up a maximum transmission power control signal based on the Pmax setting signal 132 so that the maximum transmission power of the up-link 4 may not exceed the predicted Pmax 936, and outputs it to the mobile-station transmission part 105 as the up-link power control signal 111, with the up-link power control command information separated from the baseband signal 108 as mentioned above.

The mobile-station transmission part 105 converts the up-link transmission data 109 transmitted from the mobile-station data communication part 102, into the radio frequency signal 112.

The radio frequency signal 112 is transmitted to the base station 900 from the antenna 106 through the up-link 4. At this time, in the mobile-station transmission part 105, transmission power is controlled based on the inputted up-link power control signal 111, and the input/output feature of the HPA 152 is controlled by the amplifier-characteristic control signal 131 from the Pmax setting control part 130, at the movement destination of the mobile station 100.

Since it is the same as what was described in "Embodiment 1 of the invention" except for the internal structure and operations of the mobile-station transmission part 105 mentioned above, explanations are omitted.

As described above, the communication system which is composed of the base station 900 being a fixed station and the mobile station 100 and performs transmission power control of the mobile station 100, is characterized by having a function of monitoring a transmission position of the mobile station 100 and a transmission power value at the transmission position, and predicting a maximum transmission power value required at a movement destination of the mobile station 100, and a function of controlling an operation state of the transmission system amplifier of the mobile station 100, based on the predicted maximum transmission power value.

Thus, in the above-mentioned communication system, the mobile station 100 receives prediction information on the maximum transmission power (predicted Pmax 936) required at the position of the movement destination of the mobile station 100 in advance. Then, the input/output feature of the amplifier (HPA 152) in the case of the mobile station 100 having moved to the movement destination is controlled based on the predicted Pmax 936 received indicating the maximum transmission power value. By dint of such control, the efficiency of the amplifier at the time of low transmission power can be progressed. Therefore, consumption of the battery of the mobile station 100 can be suppressed, which is effective in elongating the communication time period of the mobile station 100.

Moreover, since the predicted Pmax 936 is determined by predicting a movement destination of the mobile station 100, not by determining the Pmax 935 after the mobile station having arrived at a transmission position, it becomes possible to increase Pmax setting frequency and amplifier control frequency. Therefore, consumption of the battery of the mobile station 100 can be further suppressed by such control of the amplifier being more precise, which is effective in further elongating the communication time period of the mobile station 100.

As mentioned above, in the explanation of the present Embodiment, by multiplexing prediction information on the maximum transmission power (predicted Pmax 936) required at the transmission position of the movement destination of the mobile station 100 to an individual down-link 3,.the base station 900 reports it to a specific mobile station 100. However, there is no necessity for the base station 900 to report the predicted Pmax 936 to only the specific mobile station 100 by performing multiplex to the individual down-link 3. It is also acceptable to broadcast as a common down-link 3 to all the mobile stations 100. In this case, each mobile station 100 may receive only required information.

Moreover, in the explanation of the present Embodiment, the base station 900 reports prediction information on the maximum transmission power (predicted Pmax 936) required at the movement destination of the mobile station 100, to the mobile station 100, by multiplexing it to the down-link, and the mobile station 100 controls the amplifier based on the information. However, like the above "Embodiment 1 of the invention", it is also acceptable that the base station 900 has an amplifier control function, and performs multiplexing of the data for control (control command) to the down-link 3, and the mobile station 100 controls the amplifier based on only the data for control.

Moreover, in the explanation of the present Embodiment, like the above "Embodiment 1 of the invention", the base station 900 has a function of monitoring a position of the mobile station 100, and independently performs the position monitoring of the mobile station 100. However, it is also acceptable that, for example, the mobile station 100 includes a GPS (Global Positioning System) function etc., or the mobile station 100 has a function of connecting to an apparatus having the GPS function, obtaining location information on the mobile station 100 by connecting to the apparatus having the GPS function, and transmitting the location information from the mobile station 100 to the base station 900 through the up-link 4 to realize the position monitoring function of the mobile station 100.

### EMBODIMENT 3

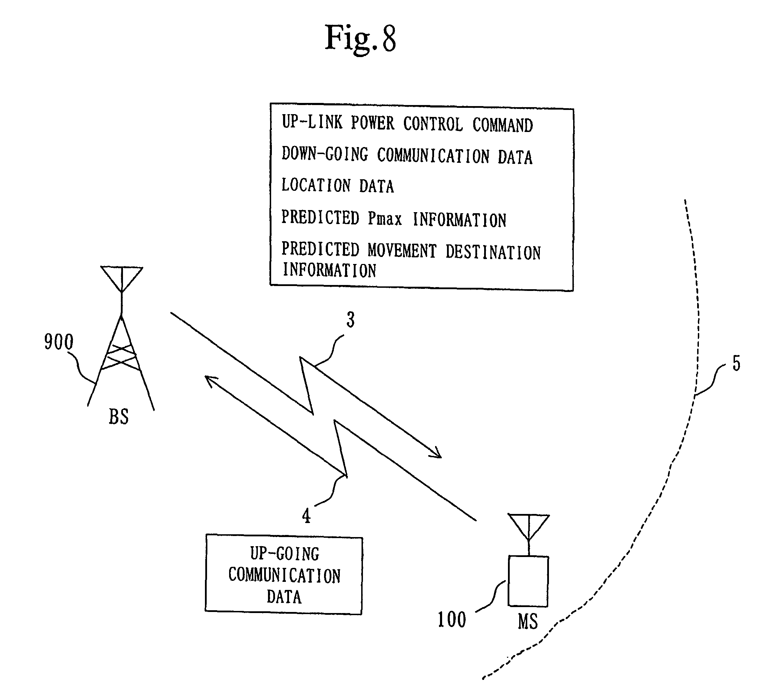

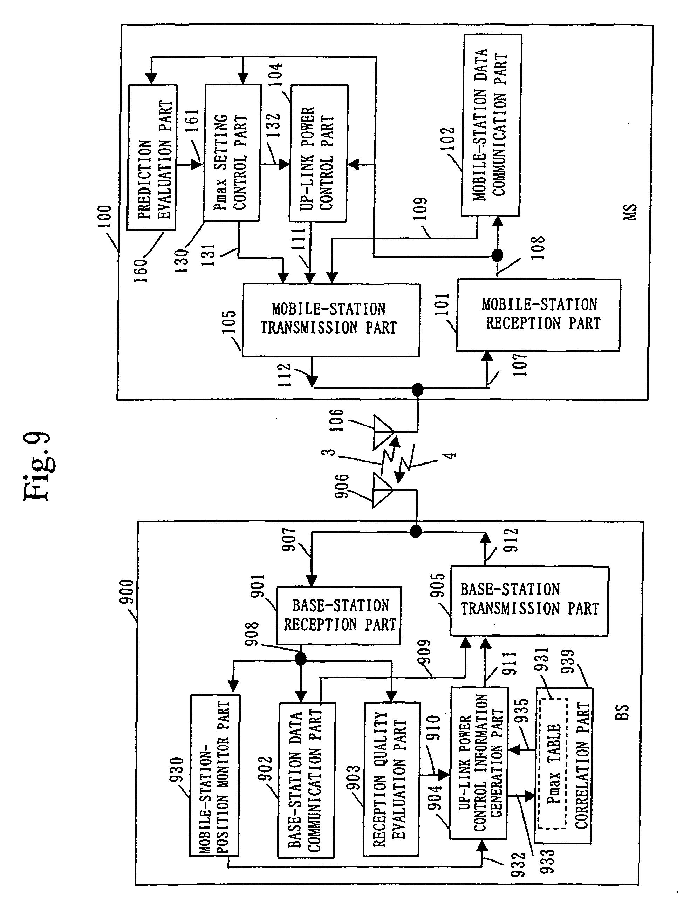

Next, Embodiment 3 of the present invention will be explained with reference to Fig. 8 and Fig. 9. A part of explanations for the same block as described in the clause of the above "Related Art" or a block corresponding to the one described in it will be omitted, and explanations focusing on different respects will be performed.

Fig. 8 shows a conceptual diagram of the communication system which performs transmission power control of the mobile station 100, as Embodiment 3 of the present invention. Fig. 9 shows each internal functional block of the base station 900 and the mobile station 100.

In Fig. 8, as a function of the base station 900, the same functions as those of the base station 900 in the above "Embodiment 1 of the invention" and "Embodiment 2 of the invention." are included in the base station 900.

As a function of the mobile station 100, a prediction evaluation function is included in addition to the same functions as those of the mobile station 100 of the above "Embodiment 1 of the invention" and "Embodiment 2 of the invention".

Moreover, in the down-link 3, in addition to down-going communication data, location information (position data) on the mobile station 100, predicted Pmax 936 and predicted movement destination information, are included with a command (up-link power control command) for controlling the transmission power of the mobile station 100. In the up-link 4, up-going communication data is included.

Next, it will be explained with reference to Fig. 9. 911 denotes the up-link power control information including mobile-station-position information and predicted maximum transmission power (predicted Pmax 936) information. 930 denotes the mobile-station-position monitor part having a function of predicting a movement destination of the mobile station 100. 932 denotes monitor information including location information on the mobile station 100 and information on a predicted movement destination of the mobile station 100. 904 denotes the up-link power control information generation part having a function of predicting a predicted Pmax 936 based on the movement destination of the mobile station 100. 160 denotes a prediction evaluation part having a function of storing location information. 161 denotes prediction evaluation result information.

Regarding the communication system structured as shown in Figs. 8 and 9, respects differing from the operation of the above "Related Art" will be explained in order of the operations of the base station 900 and the mobile station 100.

### OPERATION OF THE BASE STATION 900

First, the base station 900 receives a radio frequency signal of the up-link 4 from the antenna 906. The received radio frequency signal is converted into baseband frequency from the radio frequency, in the base-station reception part 901. The baseband signal 908 having been converted into the baseband frequency is input into the base-station data communication part 902, the reception quality evaluation part 903, and the mobile-station-position monitor part 930.

The mobile-station-position monitor part 930 detects a current position of the mobile station 100 from the received baseband signal 908. Moreover, the mobile-station-position monitor part 930 predicts a movement destination of the mobile station 100 based on a difference between the current position and the past position of the mobile station 100. Monitor information 932 including information on a detected current position of the mobile station and a predicted movement destination is transmitted to the up-link power control information generation part 904.

In the up-link power control information generation part 904, a predicted Pmax 936 required at a position of the movement destination is computed based on the reception quality evaluation information 910 and the monitor information 932 including the current position and the movement destination information. That is, based on the movement destination information included in the monitor information 932, when there is a predicted Pmax 936 corresponding to the movement destination information, the predicted Pmax 936 is selected from the Pmax table. When there is no predicted Pmax 936 corresponding to the movement destination information, predicted Pmax 936 is computed by a linear interpolation based on positions of the mobile station 100 up to the present moment, the position of the movement destination of the mobile station 100, and Pmax 935 up to the present moment.

The up-link power control information 911 including location information on a movement destination of the mobile station 100 and the predicted Pmax 936 at the movement destination is input into the base-station transmission part 905.

The base-station transmission part 905 converts the down-link transmission data 909, the up-link power control information 911 described in the "Related Art", and the up-link power control information 911 including location information of the mobile station 100 and the predicted Pmax 936 at the movement destination, into a radio frequency signal and transmits it from the antenna 906.

### OPERATION OF THE MOBILE STATION 100

The down-link radio frequency signal 107 received in the mobile station 100 is converted into the baseband signal 108 at the mobile-station reception part 101, and input into the mobile-station data communication part 102, the up-link power control part 104, the Pmax setting control part 130, and the prediction evaluation part 160.

The prediction evaluation part 160 separates information on a predicted movement destination of the mobile station 100 from the baseband signal 108 and stores it. The prediction evaluation part 160 compares the information on the predicted movement destination with the position of the actual mobile station 100, and judges whether the position is extremely shifted or not. After judging, the prediction evaluation part 160 sends the prediction evaluation result information 161 to the Pmax setting control part 130 .

The Pmax setting control part 130 separates the predicted Pmax 936 included in the baseband signal 108, from the baseband signal 108, and judges whether to adopt the information of the predicted Pmax 936 at the movement destination, based on the prediction evaluation result information 161. When judging the position in the information on the movement destination predicted by the prediction evaluation result information 161 is extremely shifted from the actual position, the Pmax setting control part 130 does not adopt the information of the predicted Pmax 936. In other case, the Pmax setting control part 130 adopts the information of the predicted Pmax 936..

When judging to adopt the information of the predicted Pmax 936, the Pmax setting control part 130 transmits the amplifier-characteristic control signal 131 for controlling the amplifier characteristic corresponding to the information of the predicted Pmax 936, to the mobile-station transmission part 105.

The up-link power control part 104 separates the up-link power control information 911 generated by the base station 900, based on the inputted baseband signal 108. Moreover, the up-link power control part 104 sets the maximum transmission power control signal, based on the Pmax setting signal 132, in order that the maximum transmission power of the up-link 4 may not exceed the predicted Pmax 936, and outputs it, with the information separated from the baseband signal 108 as mentioned above, as the up-link power control signal 111 to the mobile-station transmission part 105.

The mobile-station transmission part 105 converts the up-link transmission data 109 input from the mobile-station data communication part 102, into the radio frequency signal 112 being a radio frequency signal.

The radio frequency signal 112 is transmitted to the base station 900 from the antenna 106 through the up-link 4. At this time, in the mobile-station transmission part 105, transmission power is controlled based on the inputted up-link power control signal 111, and the characteristic of the amplifier is controlled by the amplifier-characteristic control signal 131 from the Pmax setting control part 130.

Since the internal structure and operation of the mobile-station transmission part 105 are the same as "Embodiment 1 of the invention" with reference to Figs. 3 through 5, explanations for them are now omitted.

As described above, the communication system which is composed of the base station 900 being a fixed station and the mobile station 100 and performs transmission power control of the mobile station 100, is characterized by having a function of monitoring a transmission position of the mobile station 100 and a transmission power value at the transmission position, and predicting a movement destination of the mobile station 100 and a maximum transmission power value required at the movement destination, and a function of controlling an operation state of the transmission system amplifier at the movement destination of the mobile station 100, based on the predicted movement destination and the maximum transmission power value.

Thus, in the above-mentioned communication system, by dint of the mobile station 100 receiving prediction information on the maximum transmission power required at the position of the movement destination in advance and controlling the input/output feature of the amplifier at the movement destination, the efficiency of the amplifier at the time of low transmission power can be progressed. Therefore, it is possible to make the battery of the mobile station 100 last long, which is effective in elongating the communication time period of the mobile station 100.

Furthermore, it is possible to avoid the communication state, where the maximum transmission power is insufficient and thus the communication quality is deteriorated, or the maximum transmission power becomes superfluous and thus the communication capacity is decreased, which occurs in the case the position of the movement destination of the mobile station 100 is extremely shifted from the prediction.

Furthermore, in the explanation of the present Embodiment, prediction information on the maximum transmission power required at the position of the movement destination is performed multiplexing from the base station 900 to the down-link 3 in order to be reported to the mobile station 100, and the mobile station 100 has a function of controlling the amplifier based on the information. However, like "Embodiment 1 of the invention" it is also acceptable that the base station 900 has an amplifier control function, and data for control (control command) is performed multiplexing to the down-link 3, and the mobile station 100 controls the amplifier based on only the data for control.

Moreover, in the explanation of the present Embodiment, the base station 900 has a function of monitoring a position of the mobile station 100, and independently performs the position monitoring of the mobile station 100 like "Embodiment 1 of the invention". However, it is also acceptable that the mobile station 100 includes a GPS (Global Positioning System) function etc. or connects to the GPS function etc. to obtain location information and transmits the information to the base station 900 through the up-link 4.

### EMBODIMENT 4

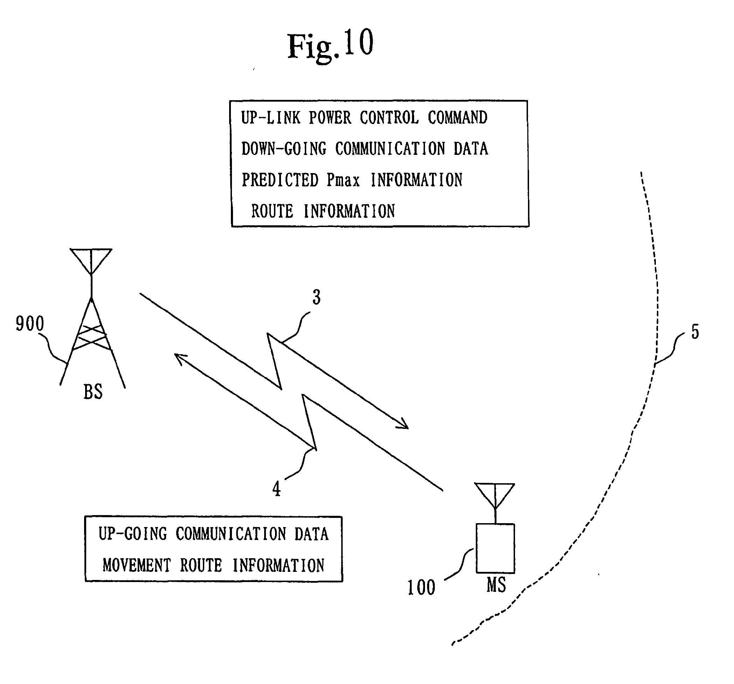

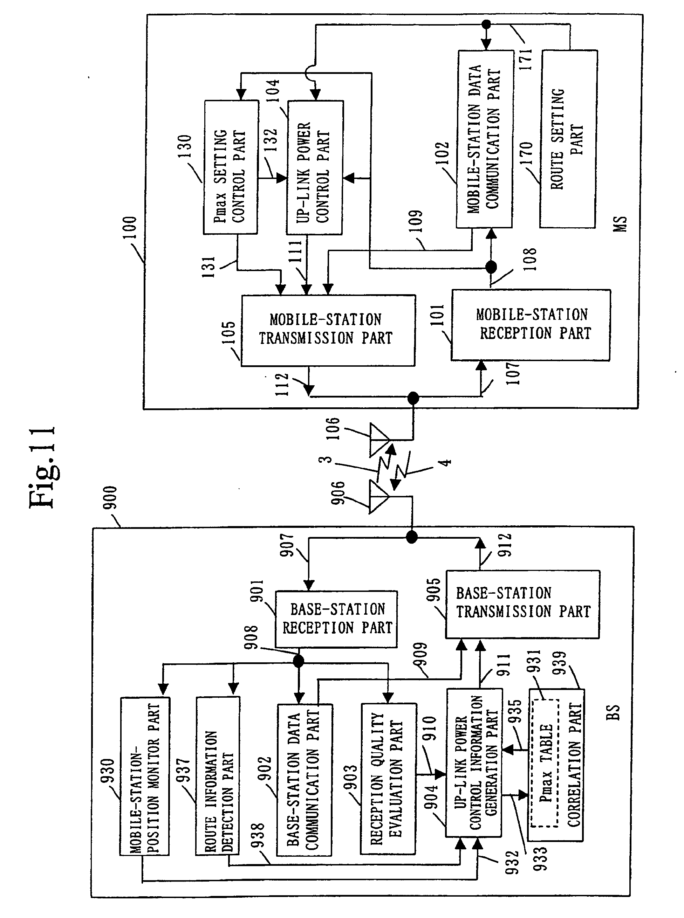

Now, Embodiment 4 of the present invention will be explained with reference to Fig. 10 and Fig. 11. A part of explanations for the same block as described in the clause of the above "Related Art" or a block corresponding to the one described in it will be omitted, and explanations focusing on different respects will be performed.

Fig. 10 shows a conceptual diagram of the communication system which performs transmission power control of the mobile station 100, as Embodiment 4 of the present invention. Fig. 11 shows each internal functional block of the base station 900 and the mobile station 100.

In Fig. 10, 900 denotes the base station, 100 denotes the mobile station, 3 denotes the down-link, 4 denotes the up-link, and 5 denotes a cell of the base station 900.

In the down-link 3, in addition to the down-going communication data, a command (up-link power control command) for controlling the transmission power of the mobile station 100, predicted maximum transmission power (predicted Pmax 936) information and route information are included. In the up-link 4, movement route information is included, in addition to the up-going communication data.

As a function of the base station 900, in addition to the same functions as those of the mobile station 100 of the above "Embodiment 1 of the invention" and "Embodiment 2 of the invention", a route information detect function is included.

As a function of the mobile station 100, in addition to the same functions as those of the mobile station 100 of the above "Embodiment 1 of the invention" and "Embodiment 2 of the invention", a route setting function is included in the functions of the mobile station 100.

Next, in Fig. 11, 911 denotes the up-link power control information including an up-link power control command and a predicted Pmax 936 for a route position. 932 denotes monitor information including location information on the mobile station. 937 denotes a route information detection part having a route information detection function. 938 denotes route information detected by the route information detection part 937. 904 denotes the up-link power control information generation part having a function of determining the predicted Pmax 936 on a specific route. 931 denotes the Pmax table.

170 denotes a route setting part. Information on the starting point and the reaching point, being the last destination, of the mobile station 100 is set in the route setting part 170, and the route setting part 170 has a function of extracting a route between the starting point and the last destination from the pre-installed map data. Further, it is also possible for the route setting part 170 to have a function of setting up a current position of the mobile station 100, by way of installing the GPS function.

Regarding the communication system structured as shown in Figs. 10 and 11, respects differing from the operation of the above "Related Art" will be explained in order of the operations of the base station 900 and the mobile station 100.

### OPERATION OF THE BASE STATION 900

First, in the base station 900, the baseband signal 908 which had been converted into the baseband frequency from the radio frequency in the base-station reception part 901 is input into the base-station data communication part 902, the reception quality evaluation part 903, the mobile-station-position monitor part 930, and the route information detection part 937.

The route information detection part 937 detects information about the route which the mobile station 100 may pass, based on the starting point and the reaching point of the mobile station 100, as route information 938. The detected route information 938 is sent to the up-link power control information generation part 904.

In the mobile-station-position monitor part 930, the current position of the mobile station 100 is detected and the detected location information (monitor information 932) on the mobile station 100 is sent to the up-link power control information generation part 904.

In the up-link power control information generation part 904, predicted Pmax 936 is determined based on the reception quality evaluation information 910, the route information 938, and the location information (monitor information 932). That is, the up-link power control information generation part 904 extracts the predicted Pmax 936 corresponding to a position included in the location information (monitor information 932) and on a route included in the route information 938, from the Pmax table 931 stored in the correlation part 939, and outputs it into the base-station transmission part 905.

The base-station transmission part 905 converts the inputted down-link transmission data 909 and the up-link power control information 911 into a radio frequency signal, and transmits it to the mobile station 100 from the antenna 906. The up-link power control information 911 includes up-link power control data and predicted Pmax 936 information corresponding to a specific position on the route.

### OPERATION OF THE MOBILE STATION 100

On the other hand, in the mobile station 100, the down-link radio frequency signal 107 received from the down-link 3 is converted into the baseband signal 108, in the mobile-station reception part 101, and is input into the mobile-station data communication part 102, the up-link power control part 104, and the Pmax setting control part 130.

By receiving a designation of the starting point and the reaching point, the route setting part 170 selects exact route information 171 which connects the starting point and the reaching point, based on the starting point and the reaching point, and transmits the selected route information 171 to the mobile-station data communication part 102 and the up-link power control part 104.

The mobile-station data communication part 102 performs multiplexing the route information 171 to communication data. The up-link power control part 104 retains the route information 171.

The Pmax setting control part 130 separates the predicted Pmax 936 corresponding to a position on the route included in the down-link 3, from the baseband signal 108. The Pmax setting control part 130 extracts the amplifier-characteristic control signal 131 for controlling the device of the amplifier (HPA 152), based on the separated predicted Pmax 936, and transmits the extracted amplifier-characteristic control signal 131 to the mobile-station transmission part 105.

The Pmax setting control part 130 transmits the Pmax setting signal 132 having information on the predicted Pmax 936 corresponding to the route point, to the up-link power control part 104.

The up-link power control part 104 separates the up-link transmission power control information 911 transmitted from the base station 900, based on the inputted baseband signal 108. Moreover, based on the Pmax setting signal 132 from the Pmax setting control part 130 and the route information 171 from the route setting part 170, the up-link power control part 104 generates a maximum transmission power control signal for controlling the maximum transmission power of the up-link 4 so that the maximum transmission power of the up-link 4 may not exceed the predicted Pmax 936, at a specific position on the route.

The up-link power control part 104 transmits the up-link power control signal 111 to the mobile-station transmission part 105, based on the generated maximum transmission power control signal and the separated up-link transmission power control information 911.

In the up-link power control part 104, the transmission power is set not to exceed the predicted Pmax 936, at a point on the route, based on the predicted Pmax setting signal 132.

In the mobile-station transmission part 105, the maximum transmission power of the up-link 4 is controlled based on the inputted up-link power control signal 111. Moreover, the mobile-station transmission part 105 controls the characteristic of the amplifier (HPA 152) at the movement destination, based on the amplifier-characteristic control signal 131 from the Pmax setting control part 130.

Since the internal structure and operations of the mobile-station transmission part 105 are the same as described in "Embodiment 1 of the invention" with reference to Figs. 3 through 5, explanations for them are now omitted.

As described above, the communication system which is composed of the base station 900 being a fixed station and the mobile station 100 and performs transmission power control of the mobile station 100, is characterized by having a function of receiving movement route information of the mobile station 100, a function of monitoring a transmission position of the mobile station and a transmission power value at the transmission position, and predicting a maximum transmission power value required on the movement route, and a function of controlling an operation state of the transmission system amplifier at the position on the movement route of the mobile station, based on the predicted maximum transmission power value.

Thus, in the above-mentioned communication system, the input/output feature of the amplifier (HPA 152) is controlled at a certain point on the route, based on the prediction information (predicted Pmax 936) of the maximum transmission power required at a position of the movement destination on the route. By dint of such control, the efficiency of the amplifier at the time of low transmission power can be progressed. Therefore, it is possible to make the battery of the mobile station 100 last long, which is effective in elongating the communication time period of the mobile station 100.

Moreover, since the movement destination is set beforehand, the movement destination prediction function is unnecessary in the mobile-station-position monitor part 930. Thus, it is effective in making the structure of the base station 900 simple.

Moreover, since the route is set beforehand, further particular transmission power control can be performed even at the point where a serious obstacle exits in communication.

The route setting function is provided in the inside of the mobile station 100, according to the present Embodiment. However, it is not necessarily needed to provide the route setting function in the inside of the mobile station 100. It is acceptable to receive the route information 171 by connecting an apparatus such as so-called GPS navigation system to the mobile station 100 to perform a route setting. Thus, it is possible to lighten the mobile station 100 and simplify the hardware and software.

### EMBODIMENT 5

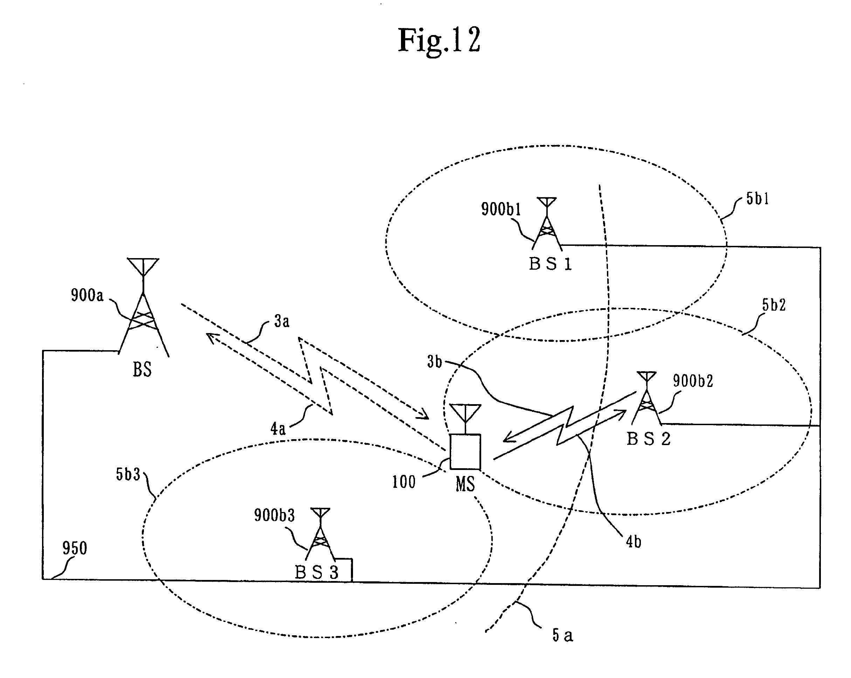

Now, Embodiment 5 of the present invention will be explained with reference to Fig. 12.

A part of explanations for the same block as described in the clause of the above "Related Art" or a block corresponding to the one described in it will be omitted, and explanations focusing on different respects will be performed.

Fig. 12 shows a conceptual diagram of the communication system which performs transmission power control of the mobile station 100, as Embodiment 5 of the present invention.

In Fig. 12, 900a denotes a base station whose cell is large, 900b1, 900b2, 900b3 denote base stations whose cells are small, and 100 denotes the mobile station. 3a and 3b denote down-links, 4a and 4b denote up-links, 5a denotes a large-cell-base-station communication range of the base station 900a, and 5b1, 5b2, and 5b3 denote small-cell-base-station communication ranges of the base stations 900b1, 900b2, and 900b3 respectively.

Fig. 12 shows a state of the mobile station 100 is transmitting and receiving to/from the base station 900b2. That is, the mobile station 100 transmits and receives to/from the base station 900b2 through the up-link 4b and the down-link 3b expressed in the solid lines.

In the case of the mobile station 100 starting transmission and reception to/from other base station 900, other up-links and down-links are used. For example, when the mobile station 100 starts transmission and reception to/from the base station 900a, the up-link 4a and the down-link 3a expressed in the dotted lines are used. Each base station is connected by a base station connection line 950.

In the down-link 3, the predicted Pmax 936 being the predicted maximum transmission power information data, with a command (up-link power control command) for controlling the transmission power of the mobile station 100 is included, in addition to the communication data.

In each of the base stations 900a, 900b1, 900b2, and 900b3, a mobile-station-position monitor function and a movement destination Pmax prediction function are respectively included.

In the mobile station 100, a transmission power control function for the up-link 4, a Pmax setting control function, and an amplifier control function are included.

The internal structure of each base station is the same as described in the above "Embodiment 2 of the invention". The internal structure of the mobile station 100 is the same as described in the above "Embodiment 1 of the invention."

The communication system structured as the above as shown in Fig. 12 will be explained below. A selection method of a base station to be communicated with the mobile station 100 will be explained.

First, as the base station to be communicated with the mobile station 100, the base station 900a and the base station 900b2 which include the mobile station 100 in the cell are selected from the base stations 900a, 900b1, 900b2, and 900b3. The base station 900a is a base station whose cell radius is large. The base station 900b2 is a base station whose cell radius is small.

In the position monitoring function, a movement speed and a movement direction of the mobile station 100 are calculated from the difference between the past position information and the current position information. When the movement speed is small, communication is performed with the small-cell base station 900b2, predicted Pmax 936 information is reported to the mobile station 100 from the small-cell base station 900b2, and control of the maximum transmission power of the mobile station 100 and control of the operation of the amplifier are performed based on the predicted Pmax 936 required for the communication with the small-cell base station 900b2.

When the movement speed of the mobile station 100 is large, hand over (changing operation of the base station to be communicated) is performed by control between base stations using the base station connection line 950. That is, communication with the mobile station 100 is switched from the small-cell base station 900b2 to the large-cell base station 900a, the information on predicted Pmax 936 is reported to the mobile station 100 from the large-cell base station 900a, and control of the maximum transmission power of the mobile station 100 and control of the operation of the amplifier are performed by the predicted Pmax 936 required for the communication with the large-cell base station 900a.

In accordance with the movement, whether to perform hand over to the large-cell base station 900a or to perform hand over to other small-cell base station 900b1 or base station 900b3 is determined depending upon the movement speed and the movement direction of the mobile station 100.

On the other hand, in the mobile station 100, when the hand over is performed, setting and control of the maximum transmission power, and control of the operation of the amplifier are performed based on the predicted Pmax 936 information from the base station after the hand over.

As mentioned above, the communication system is characterized by a function of having capability to transmit the maximum transmission power value or transmission system control information from a plurality of base stations 900 whose transmission ranges differ, to the mobile station 100, a function of monitoring the movement speed of the mobile station 100, and a function of switching a maximum transmission power value or a transmission base station which performs the transmission system control, depending upon the movement speed.

Thus, in the above-mentioned communication system, the input/output feature of the amplifier (HPA 152) is controlled at the movement destination, based on the prediction information (predicted Pmax 936) on the maximum transmission power required at the position of the movement destination. By dint of such control, the efficiency of the amplifier at the time of the low transmission power of the up-link 4 can be progressed. Thus, it is possible to make the battery of the mobile station 100 last long, which is effective in elongating communication time.

Moreover, by way of switching the base stations 900 whose cell sizes differ, depending upon the speed of the mobile station 100, and performing communication, the accuracy of monitoring the position of the mobile station 100 is enhanced, and setting and control of the maximum transmission power at the position of the mobile station 100 and control of the amplifier can be performed under the prediction of high accuracy. Therefore, it is possible to make the battery of the mobile station 100 last long, which is effective in elongating communication time period.

Furthermore, in the explanation of the present Embodiment, only the information on predicted Pmax 936 is reported at the down-link 3. However, it is also acceptable, like other "Embodiment of the invention" described above, to structure the base station 900 and the mobile station 100 so that information of Pmax 935 for a position, information on predicted Pmax 936, and predicted Pmax 936 information for a predicted movement destination may be reported and used.

A mobile apparatus, such as a portable telephone, portable information terminal, notebook type personal computer, Internet terminal, and portable information type wrist watch, corresponds to the mobile station 100 described in the above Embodiments.

In the above Embodiment, the Pmax value or predicted Pmax value being the maximum transmission power value is used as information for controlling the input/output feature of the amplifier. However, it is not necessarily needed to regard the maximum transmission power value as the control information, and other transmission power value can be used as information for controlling the input/output feature of the amplifier.

Moreover, in the above Embodiment, each operation of each structure element relates to each other, and operations of each structure element can be replaced by a series of operations, with taking the relation of operations described above into consideration. Performing such replacement can create an Embodiment of a method of the invention.

Moreover, replacing the operation of each structure element stated above with processing of each structure element can create an Embodiment of a program. Such Embodiment can be composed of a program to be operated by a computer. Each processing in the Embodiment of the program is executed by a program. This program is recorded in a recording apparatus, it is read into a central processing unit (CPU) from the recording apparatus, and each flowchart is executed by the central processing unit. The recording apparatus and the central processing unit are not shown in the figures.

Moreover, it is also acceptable that the software and the program of each Embodiment is realized by a firmware stored in a ROM (READ ONLY MEMORY), or each function of the program stated above is realized by a combination of software, firmware, and hardware.

### Industrial Applicability

According to the present invention, it is possible to output a maximum transmission power value required at a transmission position of the mobile station, as a control signal of the amplifier.

Moreover, according to the present invention, it is possible to predict a movement destination of the mobile station, and output prediction information on a maximum transmission power value required at a predicted movement destination, as a control signal of the amplifier.

Moreover, according to the present invention, it is possible to predict a movement destination of the mobile station, and judge whether to adopt prediction information on a maximum transmission power value required at a predicted movement destination.

Moreover, according to the present invention, it is possible to output a maximum transmission power value required at a position of the mobile station which exists on the route, as a control signal of the amplifier, based on route information of the mobile station.

Furthermore, according to the present invention, it is possible to switch each of a plurality of fixed stations which output a maximum transmission power value required at a transmission position of the mobile station, as a control signal of the amplifier.

Moreover, according to the present invention, it is possible to reduce current consumption by controlling the amplifier, based on a control signal including maximum transmission power value information required at a transmission position of the mobile station.

Moreover, according to the present invention, it is possible to control the amplifier, based on a control signal including prediction information on a maximum transmission power value required at a predicted movement destination.

Moreover, according to the present invention, when it is judged to adopt prediction information on a maximum transmission power value required at a predicted movement destination, it is possible to control the amplifier, based on a control signal including prediction information on a maximum transmission power value.

Moreover, according to the present invention, it is possible to control the amplifier, based on a control signal including maximum transmission power value information required at a position of the mobile station which exists on a route.

Furthermore, according to the present invention, it is possible to structure a communication system where the amplifier is controlled to transmit at the maximum transmission power required at a transmission position of the mobile station.

## Claims

1. A base station comprising:
a base-station reception part for receiving a radio signal from a mobile station;
a mobile-station-position monitor part for detecting location information on the mobile station from the radio signal received by the base-station reception part;
a correlation part for correlating a transmission power value for transmitting information with the location information on the mobile station; and
an up-link power control information generation part for selecting the transmission power value correlated by the correlation part to be corresponding to the location information on the mobile station detected by mobile-station-position monitor part, and for generating up-link power control information to the mobile station, based on a selected transmission power value.

2. The base station of claim 1,
wherein the mobile-station-position monitor part detects a plurality of the location information on the mobile station from the radio signal received by the base-station reception part, and predicts a movement destination of the mobile station based on a detected plurality of the location information, and
the up-link power control information generation part calculates a transmission power value required for communication at a position of the movement destination of the mobile station predicted by the mobile-station-position monitor part, to be corresponding to the transmission power value required for communication at each position in the detected plurality of the location information on the mobile station, and generates up-link power control information to the mobile station, based on a calculated transmission power value.

3. The base station of claim 1,
wherein the mobile-station-position monitor part predicts a movement destination of the mobile station, based on detected location information on the mobile station, and
the up-link power control information generation part selects the transmission power value correlated by the correlation part to be corresponding to information on the movement destination of the mobile station predicted by the mobile-station-position monitor part, and generates the up-link power control information to the mobile station, based on a selected transmission power value.

4. The base station of claim 1, further comprising:
a route information detection part for detecting route information on the mobile station, from the radio signal received by the base-station reception part,
wherein the correlation part correlates the location information on the mobile station with the route information, and
the up-link power control information generation part selects the transmission power value correlated by the correlation part based on the route information detected by the route information detection part and the location information on the mobile station detected by mobile-station-position monitor part, and generates the up-link power control information to the mobile station, based on a selected transmission power value.

5. The base station of claim 1, wherein a plurality of the base stations exists, and the mobile-station-position monitor part predicts a movement state of the mobile station based on a detected location information on the mobile station, selects the base station to communicate with the mobile station from the plurality of the base stations, based on a predicted movement state, and switches communication with the mobile station, to a selected base station.

6. A mobile station comprising:
a mobile-station reception part for receiving a radio signal including information on a transmission power value required for communication at a position of the mobile station, from a base station;
an amplifier for controlling up-link power by a control signal;
a transmission power value setting control part for separating the information on the transmission power value required for communication at the position of the mobile station, from the radio signal received by the mobile-station reception part, and for generating an amplifier-characteristic control signal for obtaining output characteristics of the amplifier to be corresponding to the transmission power value, from a separated information on the transmission power value; and
a mobile-station transmission part for controlling the output characteristics of the amplifier, based on the amplifier-characteristic control signal generated by the transmission power value setting control part.

7. The mobile station of claim 6 further comprising:
an up-link power control part for generating a transmission power control signal for controlling the transmission power value to be transmitted to the base station, based on the information on the transmission power value separated by the transmission power value setting control part,
wherein the mobile-station transmission part controls the transmission power value of the amplifier, based on the transmission power control signal generated by the up-link power control part.

8. The mobile station of claim 6,
wherein the transmission power value setting control part separates prediction information on a transmission power value required for communication at a movement destination of the mobile station, from the radio signal received by the mobile-station reception part, and generates the amplifier-characteristic control signal for obtaining the output characteristics of the amplifier to be corresponding to a predicted transmission power value based on separated prediction information on the transmission power value.

9. The mobile station of claim 8, further comprising:
a prediction evaluation part for detecting the prediction information on the movement destination, from the radio signal received by the mobile-station reception part, comparing a detected movement destination with an actual position, and judging one of to adopt the prediction information on the movement destination and not to adopt the prediction information on the movement destination,
wherein the transmission power value setting control part, when it is judged to adopt the predicted information on the movement destination by the prediction evaluation part, generates the amplifier-characteristic control signal for obtaining the output characteristics of the amplifier to be corresponding to the predicted transmission power value.

10. The mobile station of claim 6, further comprising:
a route setting part, by receiving designation of a starting point and a reaching point, for setting route information based on the starting point and the reaching point, and
a mobile-station data communication part for multiplexing the route information set by the route setting part, to information to be transmitted to the base station.

11. A communication system comprising:
a base station which comprises:
a base-station reception part for receiving a radio signal from a mobile station;
a mobile-station-position monitor part for detecting location information on the mobile station from the radio signal received by the base-station reception part;
a correlation part for correlating a transmission power value for transmitting information with the location information on the mobile station; and
an up-link power control information generation part for selecting the transmission power value correlated by the correlation part to be corresponding to the location information on the mobile station detected by mobile-station-position monitor part, and for generating up-link power control information to the mobile station, based on a selected transmission power value, and
the communication system comprising:
a mobile station which comprises:
a mobile-station reception part for receiving a radio signal including information on a transmission power value required for communication at a position of the mobile station, from a base station;
an amplifier for controlling up-link power by a control signal;
a transmission power value setting control part for separating the information on the transmission power value required for communication at the position of the mobile station, from the radio signal received by the mobile-station reception part, and for generating an amplifier-characteristic control signal for obtaining output characteristics of the amplifier to be corresponding to the transmission power value, from a separated information on the transmission power value; and
a mobile-station transmission part for controlling the output characteristics of the amplifier, based on the amplifier-characteristic control signal generated by the transmission power value setting control part.

12. A base station communication method comprising:
receiving a radio signal from a mobile station;
detecting location information on the mobile station from a received radio signal; correlating detected location information on the mobile station with a transmission power value for transmitting information; and
generating up-link power control information to the mobile station, based on a correlated transmission power value.

13. A base station communication program which makes a computer execute processes comprising:
a process of receiving a radio signal from a mobile station;
a process of detecting location information on the mobile station from a received radio signal;
a process of correlating detected location information on the mobile station with a transmission power value for transmitting information; and
a process of generating up-link power control information to the mobile station, based on a correlated transmission power value.

14. A mobile station communication method comprising:
receiving a radio signal including information on a transmission power value required for communication at a position of a mobile station, from a base station; separating the information on the transmission power value required for communication at the position of the mobile station, from a received radio signal;
generating an amplifier-characteristic control signal for obtaining output characteristics of an amplifier to be corresponding to the transmission power value, from a separated information on the transmission power value; and
controlling the output characteristics of the amplifier, based on a generated amplifier-characteristic control signal.

15. A mobile station communication program which makes a computer execute processes comprising:
a process of receiving a radio signal including information on a transmission power value required for communication at a position of a mobile station, from a base station;
a process of separating the information on the transmission power value required for communication at the position of the mobile station, from a received radio signal, and generating an amplifier-characteristic control signal for obtaining output characteristics of an amplifier to be corresponding to the transmission power value, from a separated information on the transmission power value; and
a process of controlling the output characteristics of the amplifier, based on a generated amplifier-characteristic control signal.
